# EUROPEAN PATENT APPLICATION

(11) **EP 4 550 366 A1**
(43) Date of publication of application: **07.05.2025**
(21) Application number: 23207784.2
(22) Date of filing: 03.11.2023
(51) Int. Cl.: H01F 3/10, H01F 27/38, H02M 1/00

(54) **INTEGRATED MAGNETIC COMPONENT AND LLC RESONANT CONVERTERS**

(71) Applicant: Delta Electronics (Thailand) Public Co., Ltd., Samutprakarn 10280 (TH)
(72) Inventor: NJIENDE, Hugues, 33102 Paderborn (DE)
(74) Representative: Hoefer & Partner Patentanwälte mbB

(57) **Abstract**

The invention concerns an integrated magnetic component (1) for a converter (100, 110), comprising: at least one first type magnetic core element (2) comprising a yoke (4) and at least three legs (5, 6), wherein a first total number of legs (5, 6) is defined as a number of said legs (5, 6) of each of said at least one first type magnetic core element (2); at least one second type magnetic core element (3) comprising a yoke (4) and at least three legs (5, 6) wherein a second total number of legs (5, 6) is defined as a number of said legs (5, 6) of each of said at least one second type magnetic core element (3); wherein at least one first type magnetic core element (2) and at least one second type magnetic core element (3) are stacked one on another along a stacking direction (8) such that their legs (5, 6) are arranged in row, the first total number of legs (5, 6) and the second total number of legs (5, 6) are each an addition of a respective number of winding legs (5), around which electric winding (7) is wound, with a number of return legs (6), around which no electric winding (7) is wound, and the first total number of legs (5, 6) and the second total number of legs (5, 6) are non-equal. The invention also concerns a unidirectional LLC resonant converter (100) and a bidirectional LLC resonant converter (110).

## Description

### Field of the Invention

The invention concerns an integrated magnetic component and a LLC resonant converters, particularly a unidirectional LLC resonant converter and a bidirectional LLC resonant converter, comprising the integrated magnetic component.

### Background of the Invention

Conventionally, integrated magnetic components comprising a plurality of magnetic core elements and their implementation in LLC (unidirectional or bidirectional) are known from for example EP 3 401 935 A1. As shown in for example Figs. 5a and 5b thereof, such integrated magnetic components comprise a single magnetic core with three stacked E-cores, wherein each of the E-cores comprises a flange (also commonly referred to as "yoke" or "body portion") and three legs. In their implementation in an LLC converter, the top E-core together with its electrical windings acts as a choke, wherein the other two E-cores act respectively with their windings as primary and secondary sides of a transformer. Furthermore, Figs. 13 & 14 thereof show an arrangement of five legged magnetic cores, which are also referred to as "W-cores".

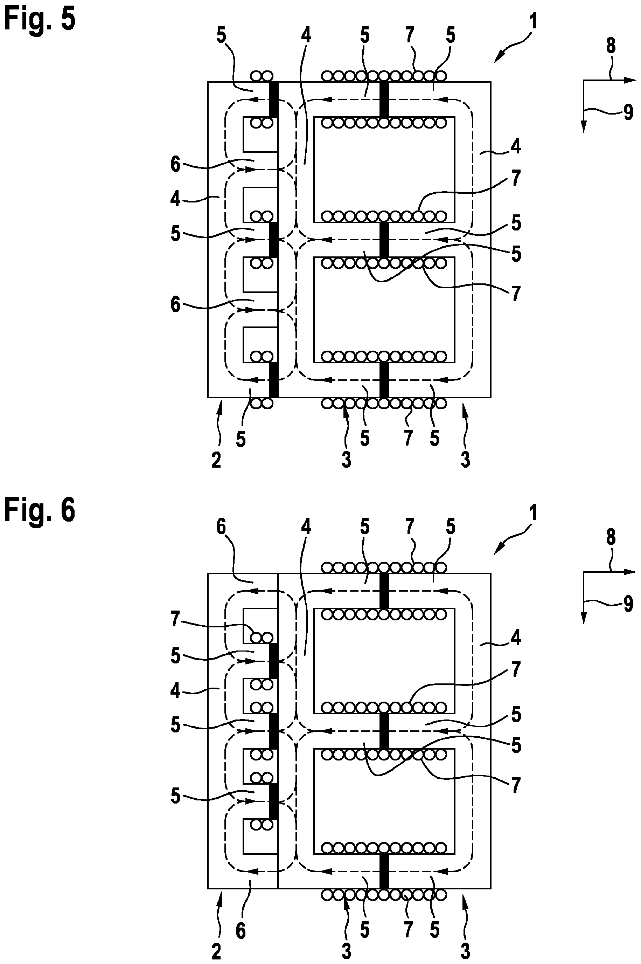

CN 218182007 U also shows a transformer structure with multiple magnetic cores. In for example Figs. 5a and 5b thereof, multiple E-cores are shown in an E∃ or EI∃ arrangement are shown.

However, the conventional magnetic components have disadvantages. The previously known stacked E-core arrangements cannot be employed for three-phase converters, each having a current with a phase shift of 120°. Further, current imbalances and their generated magnetic flux imbalances are not adequately compensated by return legs. On the other hand, the previously known stacked W-core arrangements employed for three-phase converters have the disadvantage in that a high amount of magnetic material, which is expensive, and a high volume and weight are necessary.

### Summary

It is an object of the present invention to overcome these deficiencies. In particular, it is an object of the present invention to provide an integrated magnetic component with reduced weight and volume, and which is easy and cost-effective to assemble. It is further an object of the present invention to provide an LLC resonant converter, unidirectional or bidirectional, which has reduced weight and volume, is easy and cost-effective to assemble and in which current imbalances and magnetic flux imbalances are adequately compensated, thereby increasing both thermal and electric/power efficiency and lowering losses, particularly iron losses.

The solution of these objects is achieved by the subject matter of the independent claim. The dependent claims contain advantageous embodiments of the present invention.

In particular, the solution of these objects is achieved by an integrated magnetic component according to claim 1 and the following. An integrated magnetic component according thereto is configured to be used in a converter. The integrated magnetic component comprises at least one first type magnetic core element and at least one second type magnetic core element. The at least one first type magnetic core element comprises a yoke and at least three legs. Therein, a first total number of legs is defined as a number of said legs of each of said at least one first type magnetic core element. The at least one second type magnetic core element comprises a yoke and at least three legs. Therein, a second total number of legs is defined as a number of said legs of each of said at least one second type magnetic core element. At least one first type magnetic core element and at least one second type magnetic core element are stacked one on another along a stacking direction such that their legs are arranged in row. The first total number of legs and the second total number of legs are each an addition of a respective number of winding legs, around which electric winding is wound, with a number of return legs, around which no electric winding is wound. Therein, the first total number of legs and the second total number of legs are non-equal.

Therein, the yoke connects the legs of each magnetic core element, wherein the legs extend from a side of the yoke. The return legs, around which no winding is wound, together with the yoke close a magnetic circuit generated by a magnetic flux by the windings of the winding legs.

In other words, in the integrated magnetic component, at least two (at least one of the first type and at least one of the second type) magnetic core elements are stacked one on another, wherein these two have a different total number of legs.

In the foregoing and in the following, the term "integrated" with regard to the "integrated magnetic component" means that, together with windings, multiple functions of a converter or transformer are integrated with the magnetic core elements and windings in the integrated magnetic component. For instance, the first and second type magnetic core elements together with appropriate windings can form a part of a choke and a transformer.

For instance, in one example, the two magnetic core elements may be an EW or WE arrangement. Thereby, current imbalances are compensated better versus a common EE/E∃ arrangement, thus lowering losses and increasing efficiency. Furthermore, weight, volume and costs are reduced versus WW arrangements.

In some embodiments, more than the aforementioned at least one first type and at least one second type magnetic core elements can be employed. For instance, at least one I-core may be further interposed or arranged at the end of the aforementioned stack of first and second type magnetic core elements. Furthermore, more than one of the first type and/or the second type magnetic core elements, respectively, can be employed. For instance, the integrated magnetic component comprises EIW, EWI, WEI, WIE, EWIE, WEIW, WIEW, EIWE, etc., so long as at least one of the first type and at least one of the second type with different numbers of legs are provided.

For illustration purposes, in an EW arrangement, the E-core (first type with three total legs) can form a part of a primary side and the W-core (second type with five total legs) can form a part of a secondary side of a transformer (together with windings). Herein and in the following, when referring to a magnetic core element (or E-core, W-core, etc.) forming a part of a choke or transformer (primary, secondary sides), this preferably refers to a magnetic flux thereof. In some examples, the windings which form a primary and secondary side, and are thus insulated from one another, can be arranged for example in a bifilar configuration. Thereby, one magnetic core element can form a part of a primary side and a part of a secondary side with respect to magnetic flux flowing therethrough.

In an exemplary three-phase arrangement, the E-core will comprise three winding legs (three windings, each around one leg) and the W-core will comprise three winding legs (three windings, each around one leg) and two return legs. The return legs of the W-core advantageously compensate for current imbalances, which also lead to magnetic flux in the E-core. Furthermore, by providing EW instead of for example WW, weight, volume, and costs of such a magnetic component are reduced.

In particular, the first type magnetic core element has more legs than the second type magnetic core element or vice versa. Therein, the magnetic core element with more legs than the other advantageously provides compensation of current imbalances and magnetic fluxes.

In advantageous embodiments, the number of winding legs of the first type magnetic core element and the number of winding legs of the second type magnetic core element are equal.

For example, in three-phase implementations, each of the first type and the second type magnetic core elements comprises three windings legs.

Further advantageously, the number of return legs of the first type magnetic core element and the number of return legs of the second type magnetic core element are non-equal. For example, in a three-phase EW arrangement, the first type magnetic core element (E-core) has no return legs (only winding legs) and the second type magnetic core element (W-core) has two return legs.

In some advantageous embodiments, the integrated magnetic component comprises, in order along stacking direction, one first type magnetic core element and two second type magnetic core elements, wherein the second of the two second type magnetic core elements opposes the first of the two second type magnetic core elements. One illustrative example of this is a WE∃ arrangement. Another illustrative example of this is a EWW arrangement (or "EWM" arrangement for opposing second type magnetic core elements).

Herein and in the following, the term "opposes", especially "opposes in stacking direction" means that the legs of one core element extend, from the respective yoke of that core element, opposite (with respect to stacking direction) the legs of the other core element, which extend from the yoke of that other core element. In non-opposing arrangements, the legs of one core element extend in the same direction, with respect to stacking direction, as the legs of the other core element. An illustrative example of "opposing" is an E∃ arrangement, whereas an illustrative example of "non-opposing" is an EE or an ∃∃ arrangement.

Therein, in some embodiments, the first total number of legs is three and the second total number of legs of each of the two second type magnetic core elements is five. For example, this is also referred to as a EWW or EWM arrangement, with "WM" meaning that the two W-cores oppose one another. Of course, at least one I-core may additionally be interposed or arranged at the ends of such an exemplary arrangement. This configuration has the particular advantage in that current imbalances can be compensated particularly effectively via the second type magnetic core elements, while also reducing the overall weight and size of the device via the first type magnetic core element.

Advantageously therein, the first type magnetic core element comprises three winding legs and no return legs. Each of the second type magnetic core elements comprises three winding legs and two return legs. This embodiment is especially suited for three-phase configurations.

Preferably, in a yoke extension direction perpendicular to the stacking direction, the winding legs of the second type magnetic core elements are the two outermost legs and the middle leg of the second type magnetic core elements. Therein, the winding legs and the return legs are arranged alternatingly along the yoke extension direction (i.e. winding, return, winding, return, winding in yoke extension direction). This has the particular advantage in that cooling of the integrated magnetic component can be carried out easily on the outermost legs of the second type magnetic core elements, i.e. on outer surfaces thereof.

In a preferable alternative, in the yoke extension direction, the return legs of the second type magnetic core elements are the two outermost legs. Therein, the winding legs are the middle three legs of the second type magnetic core elements (i.e. return, winding, winding, winding, return in yoke extension direction). This has the particular advantage in that electromagnetic fields are screened by the outer return legs and prevented from extending far outside of the integrated magnetic component, which reduces unwanted EMI (electromagnetic interference).

In a preferable alternative embodiment, the first total number of legs is five and the second total number of legs is three. For example, this is also referred to as a WE∃ arrangement. Of course, at least one I-core may additionally be interposed or arranged at the ends of such an exemplary arrangement. This configuration has the particular advantage in that the overall weight and size of the device is reduced by the second type magnetic core elements, while also compensating current imbalances the first type magnetic core element.

Therein, preferably, the first type magnetic core element comprises three winding legs and two return legs. Further, each of the second type magnetic core elements comprises three winding legs and no return legs. This embodiment is especially suited for three-phase configurations.

In a preferable embodiment, in the yoke extension direction, the winding legs of the first type magnetic core element are the two outermost legs and the middle leg, especially with the winding legs and the return legs being arranged alternatingly along the yoke extension direction (i.e. winding, return, winding, return, winding in yoke extension direction). This configuration has the particular advantage in that cooling can be carried out easily and efficiently on outer surfaces of the first type magnetic core element.

In a preferable alternative embodiment, in the yoke extension direction, the return legs of the first type magnetic core element are the two outermost legs. Therein, the winding legs of the first type magnetic core element are the three middle legs thereof (i.e. return, winding, winding, winding, return in yoke extension direction). This has the particular advantage in that electromagnetic fields are screened by the outer return legs and prevented from extending far outside of the integrated magnetic component, which reduces unwanted EMI (electromagnetic interference).

Preferably, a height of the first type magnetic core element along the yoke extension direction is smaller than a height of at least one of the second type magnetic core elements. Thereby, volume, size, and costs of the integrated magnetic component can be further advantageously reduced.

Preferably, all winding legs of the first type magnetic core element and all winding legs of the second type magnetic core elements are arranged collinearly along and parallel to the stacking direction. In one embodiment, for example, the first type magnetic core element comprises five legs, with the winding legs being the two outermost and the middle leg, and the second type magnetic core elements each comprise three legs (all winding legs). Therein, dimensions (particularly height) of the first type and second magnetic core elements are such that their winding legs are collinear, i.e. in one line, along the stacking direction. Further, for example, the first magnetic core element comprises three legs, and the second type magnetic core elements each comprise five legs. In the example of the windings of the second type magnetic core elements being on the two outermost and middle legs, in the collinear arrangement, the first and second type core elements are dimensioned (particularly their height) the same or similarly along the yoke extension direction, such that all winding legs are collinear. In the example of the windings of the second type magnetic core elements being on the three middle legs, in the collinear arrangement, the first type core element (having three legs) is dimensioned smaller, especially having a smaller height, along the yoke extension direction, such that all winding legs are collinear. These collinear examples have the particular advantage that windings can be easily arranged in the integrated magnetic component.

In a preferable alternative, respectively two of the winding legs of the first type magnetic core element and two of the winding legs of the second type magnetic core elements are arranged non-collinearly along and parallel to the stacking direction. One illustrative example of this, especially in comparison with the collinear arrangement, is the first type magnetic core element comprising in total three legs, with the second type magnetic core elements comprising five legs with windings on the outermost and middle legs thereof, and the first type magnetic core element is dimensioned smaller, especially having a smaller height, in yoke extension direction than the second type magnetic core elements, such that the two outermost windings of the first type magnetic core are non-collinear with the two outermost windings of the second type magnetic core elements. Therein, the middle windings of the first and second type magnetic core elements are collinear. Further, the outermost windings of the first type magnetic core element are preferably collinear with the return legs of the second type magnetic core elements. This configuration has the particular advantage in that weight and volume can be further reduced, especially via the smaller height of the first type magnetic core element, while also providing windings on the outermost legs of all magnetic core elements such that cooling can be carried out efficiently.

Preferably, in some embodiments, the windings of one first type magnetic core element are connected in series with the windings of one second type magnetic core element. In such examples, together with its windings, the first type magnetic core element is preferably part of a choke, and the second type magnetic core element, together with its windings, is preferably a part of a primary and/or a secondary side of a transformer.

Advantageously, the integrated magnetic component comprises, of the first type and the second type magnetic core elements, preferably only the aforementioned one first type and two second type magnetic core elements. Such a configuration is preferably suitable for unidirectional converters, as will be elucidated below.

Advantageously, the integrated magnetic component further comprises another first type magnetic core element according to any one of the foregoing examples. Therein, this another first type magnetic core element opposes said one first type magnetic core element (i.e. the foregoing at least one of said first type magnetic core element) along the stacking direction. Therein, the two first type magnetic core elements sandwich, along the stacking direction, the two second type magnetic core elements. Examples of such a configuration include EWW∃ or WE∃W. As also elucidated above, one or more I-cores may be interposed or arranged at the ends, in stacking direction, of such configurations. Preferably, the integrated magnetic component comprises, of the first type and the second type magnetic core elements, only the two first type and the two second type magnetic core elements. Such a configuration is preferably suitable for bidirectional converters, as will be elucidated below.

Preferably, air gaps may be provided between one or more legs of opposing magnetic core elements or between one or more legs of one magnetic core element and the yoke of another adjacent magnetic core element. In particular, winding legs are separated between respective magnetic core elements via air gaps.

The present invention also concerns LLC resonant converters including the integrated magnetic converter according to the foregoing embodiments.

In particular, the present invention further concerns a unidirectional LLC resonant converter including an input converter, an output converter, and the integrated magnetic component comprising one first type magnetic core element and two second type magnetic core elements. Therein, the input converter is connected to the windings of the one first type magnetic core element. The output converter is connected to the windings of the second, along the stacking direction, second type magnetic core element.

Preferably, in the unidirectional LLC resonant converter, the first type magnetic core element together with its windings is part of a choke. The second type magnetic core elements together with their windings define a primary side and a secondary side of a transformer. In other words, the first of the second type magnetic core elements is part of a primary side, and the second of the second type magnetic core elements is part of a secondary side of a transformer. Preferably, the windings of the first type magnetic core element are connected in series with the windings of the first of the second type magnetic core elements, i.e. the primary side.

The present invention further concerns a bidirectional LLC resonant converter including an input converter, an output converter, and the integrated magnetic component comprising the two first type magnetic core elements and the two second type magnetic core elements. Therein, the input converter is connected to the windings of the first, along the stacking direction, of the first type magnetic core elements, and the output converter is connected to the windings of the second, along the stacking direction, of the first type magnetic core elements.

Preferably, in the bidirectional LLC resonant converter, both the first type magnetic core elements, together with their windings, are part of chokes, whereas the second type magnetic core elements are parts of the transformer (primary and secondary side thereof) of the converter.

Thereby, an LLC resonant converter (unidirectional or bidirectional) is provided with the foregoing described advantages of reduced weight, volume and costs and in particular high maximum power delivery and efficiency.

In particular, the LLC resonant converter (unidirectional or bidirectional) is a three-phase LLC converter.

It should be noted that the foregoing described embodiments of E-cores and W-cores are preferable embodiments. The above described configurations may be adapted accordingly to cores with for example more than five total legs, wherein at least one first type has a different number of legs than at least one second type. For example, a configuration with five-legged cores and six-legged cores or multiples of two and three may be employed. Furthermore, any number of the aforementioned configurations may be stacked in the aforementioned stacking direction, or additionally in the yoke extension direction.

Further details, advantages, and features of the preferred embodiments of the present invention are described in detail with reference to the figures. Therein:

### Brief Description of the Drawings

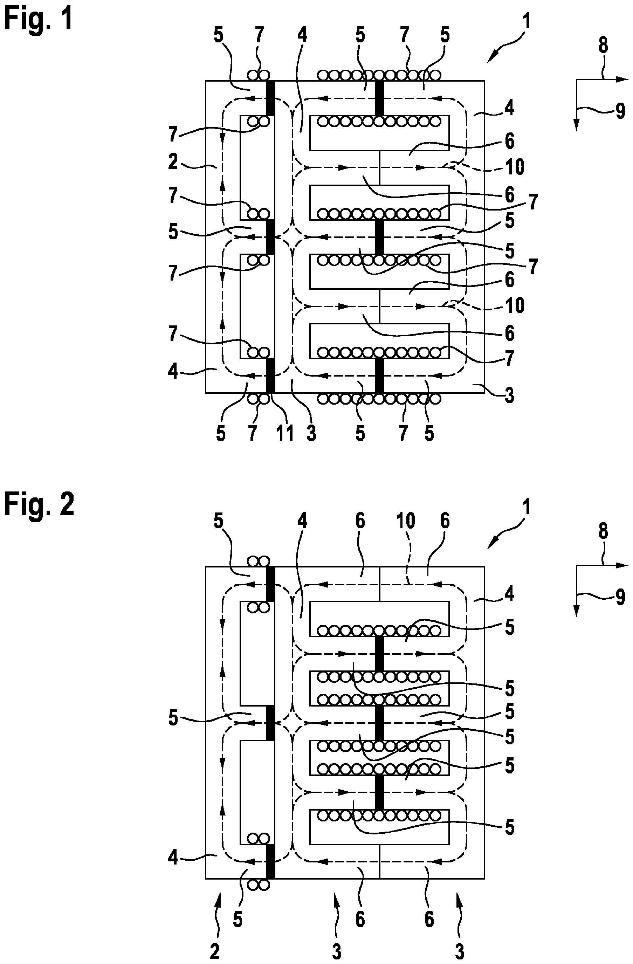

Fig. 1 shows a view of an integrated magnetic component according to a first embodiment of the present invention;
Fig. 2 shows a view of an integrated magnetic component according to a second embodiment of the present invention;

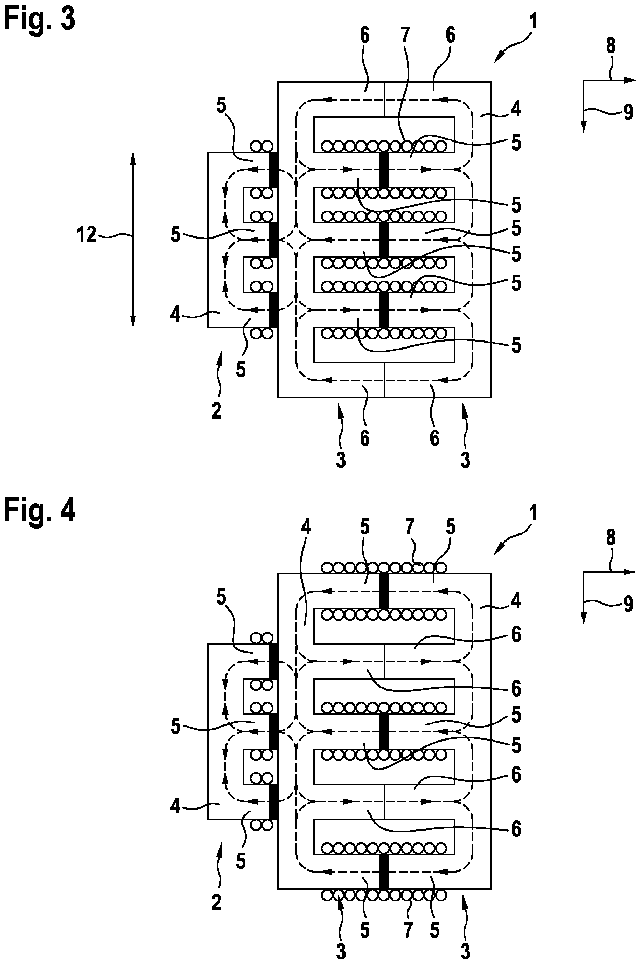

Fig. 3 shows a view of an integrated magnetic component according to a third embodiment of the present invention;
Fig. 4 shows a view of an integrated magnetic component according to a fourth embodiment of the present invention;
Fig. 5 shows a view of an integrated magnetic component according to a fifth embodiment of the present invention;
Fig. 6 shows a view of an integrated magnetic component according to a sixth embodiment of the present invention;

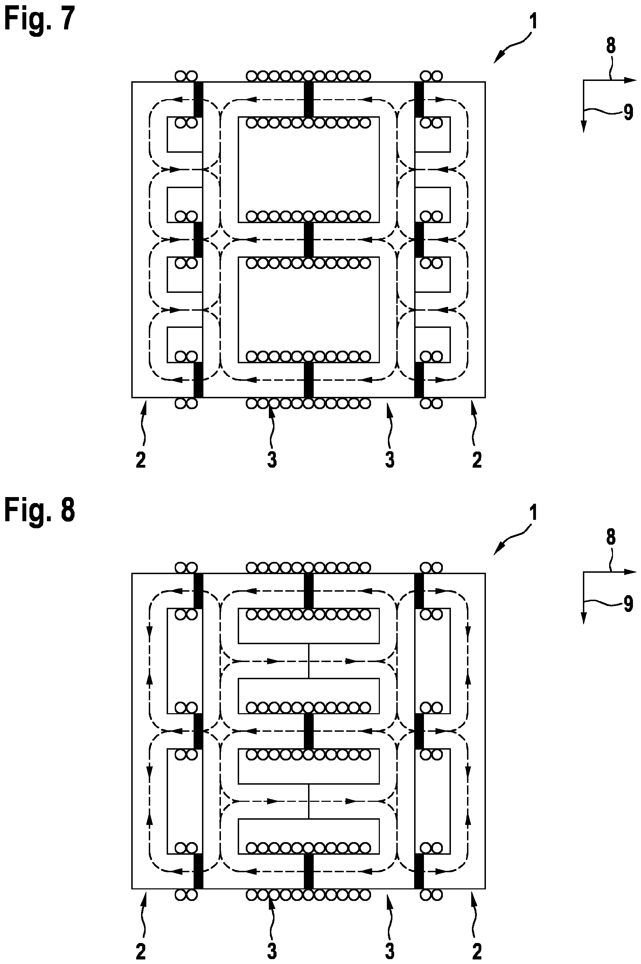

Fig. 7 shows a view of an integrated magnetic component according to a seventh embodiment of the present invention;
Fig. 8 shows a view of an integrated magnetic component according to an eighth embodiment of the present invention;

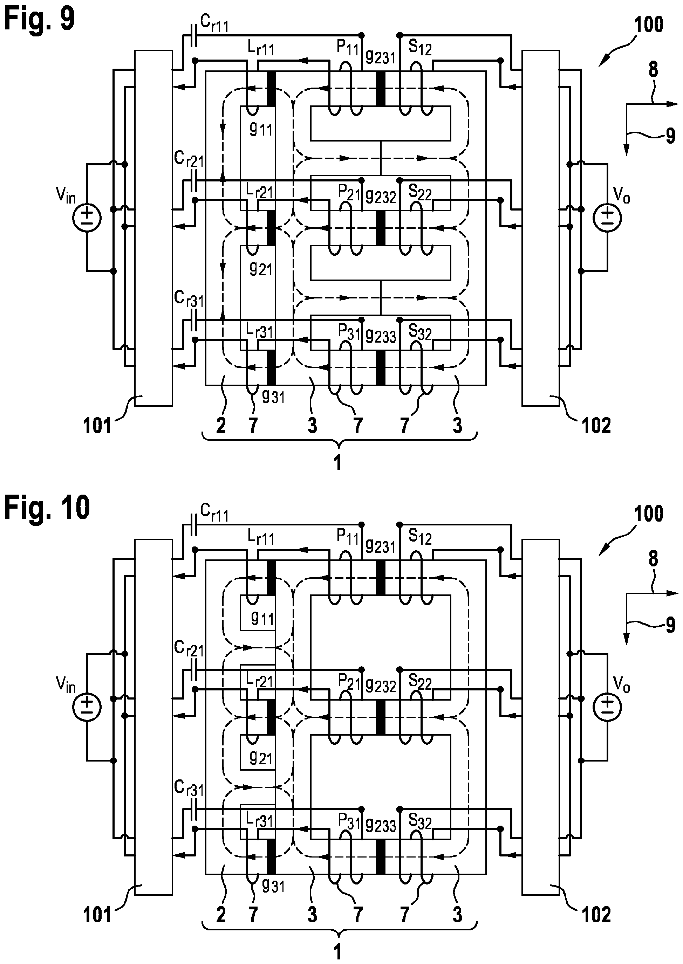

Fig. 9 shows a view of a unidirectional LLC resonant converter according to a ninth embodiment of the present invention;
Fig. 10 shows a view of a unidirectional LLC resonant converter according to a tenth embodiment of the present invention;

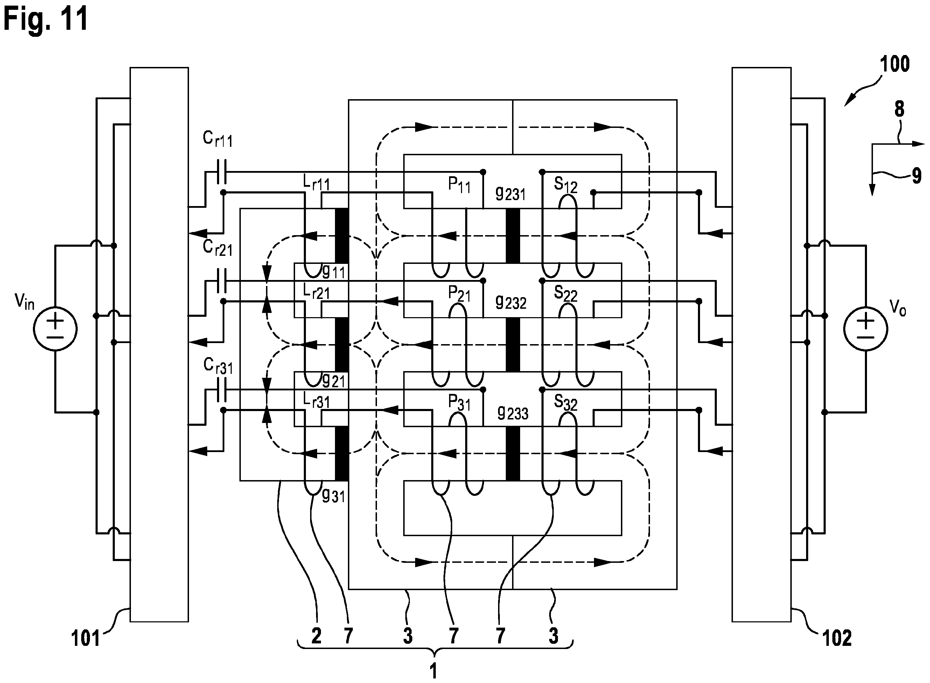

Fig. 11 shows a view of a unidirectional LLC resonant converter according to an eleventh embodiment of the present invention;

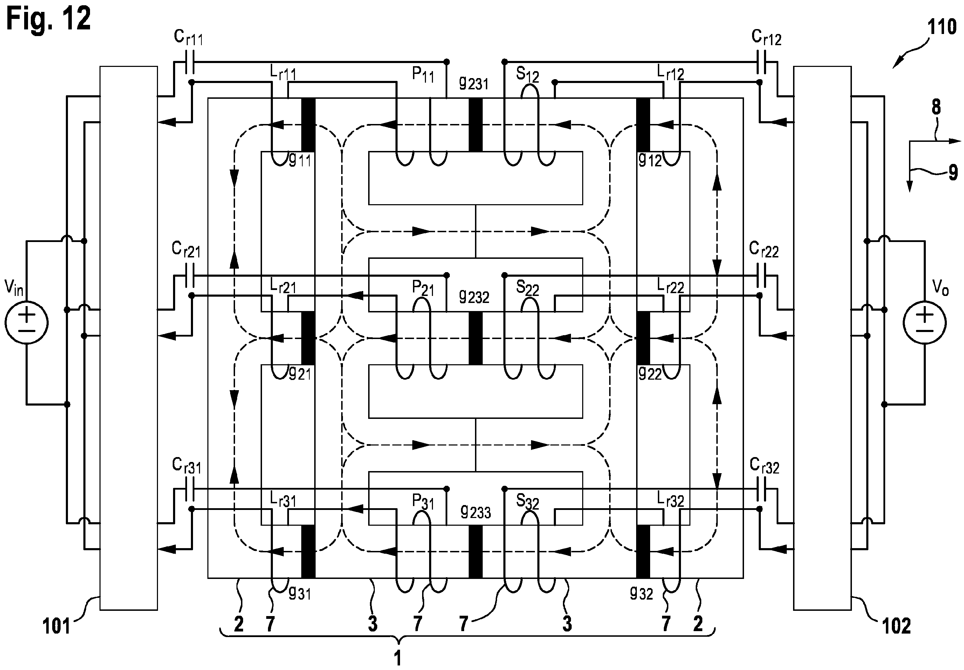

Fig. 12 shows a view of a bidirectional LLC resonant converter according to a twelfth embodiment of the present invention;

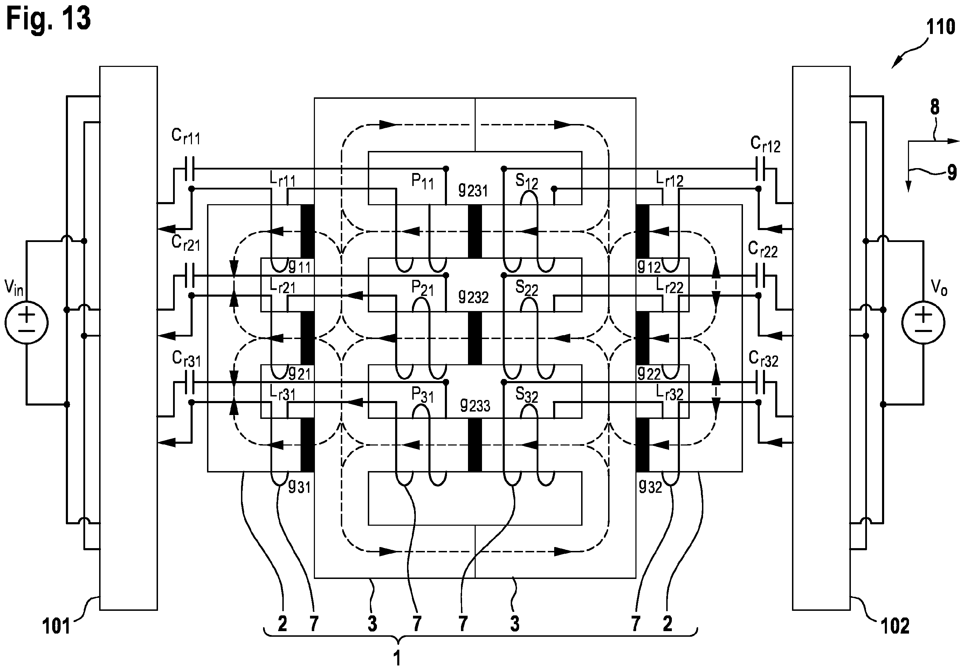

Fig. 13 shows a view of a bidirectional LLC resonant converter according to a thirteenth embodiment of the present invention; and

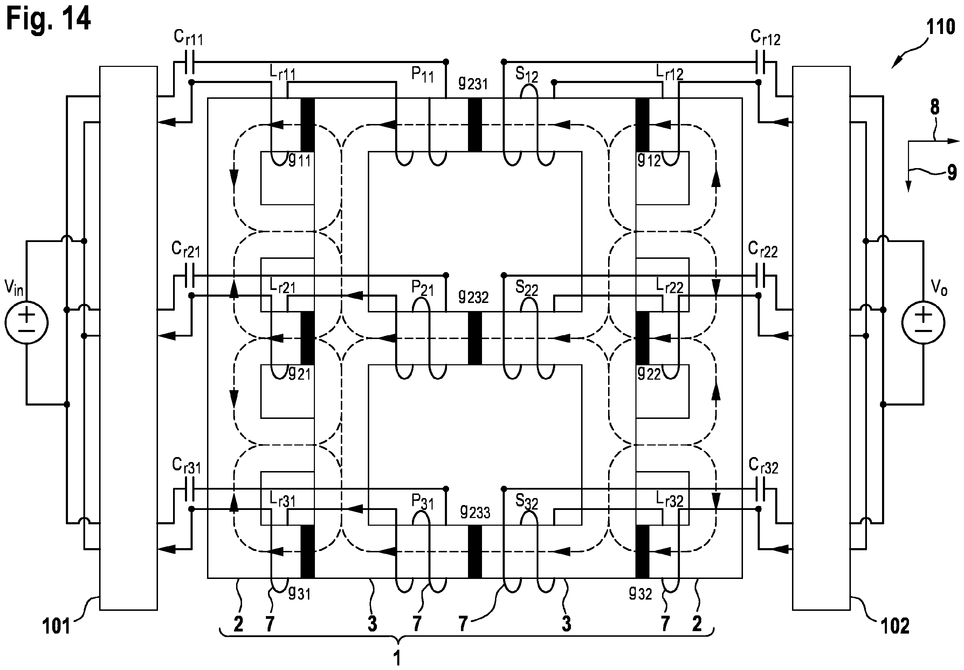

Fig. 14 shows a view of a bidirectional LLC resonant converter according to a fourteenth embodiment of the present invention.

### Description of the Embodiments

First, configurations of an integrated magnetic component 1 of the present invention will be described, before configurations of LLC resonant converters 100, 110 of the present invention are described.

Fig. 1 shows a view of an integrated magnetic component 1 according to a first embodiment of the present invention.

The integrated magnetic component 1 of the present embodiment comprises one first type magnetic core element 2 and two second type magnetic core elements 3. Further, the integrated magnetic component 1 comprises electrical winding 7. Herein, the electrical winding 7 is shown in an illustrative, cross-sectional manner.

The first type magnetic core element 2 comprises a yoke 4 and three legs 5. A first total number of legs 5 is defined as a number of said legs 5 of said first type magnetic core element 2. The second type magnetic core elements 3 respectively comprises a yoke 4 and five legs 5, 6. Therein, a second total number of legs 5, 6 is defined as a number of said legs 5, 6 of each of said second type magnetic core elements 3. Therein, the yoke 4 connects the legs 5, 6 of each magnetic core element 2, 3, wherein the legs 5, 6 extend from a side of the yoke 4.

As shown herein, one first type magnetic core element 2 and two second type magnetic core elements 3 are stacked one on another along a stacking direction 8 such that their legs 5, 6 are arranged in row. Herein, the second of the two second type magnetic core elements 3 opposes the first of the two second type magnetic core elements 3. The present embodiment may also be referred so as a EWW or EWM configuration, with the "M" meaning "opposing W".

The first total number of legs 5 and the second total number of legs 5, 6 are each an addition of a respective number of winding legs 5, around which electric winding 7 is wound, with a number of return legs 6, around which no electric winding 7 is wound. The return legs 6, around which no winding 7 is wound, together with the yoke 4 close a magnetic circuit generated by a magnetic flux 10 by the windings 7 of the winding legs 5.

In the present embodiment, the first total number of legs 5 is three and the second total number of legs 5, 6 is five. Thus, the first total number of legs 5 and the second total number of legs 5, 6 are non-equal.

The number of winding legs 5 of the first type magnetic core element 2 and the number of winding legs 5 of the second type magnetic core element 3 are equal, specifically three.

The number of return legs 6 of the first type magnetic core element 2 and the number of return legs 6 of the second type magnetic core element 3 are non-equal. Herein, the first type magnetic core element 2 (E-core) has no return legs 6 and the second type magnetic core element 3 (W-core) has two return legs 6.

Further herein, in a yoke extension direction 9 perpendicular to the stacking direction 8, the winding legs 5 of the second type magnetic core elements 3 are the two outermost legs 5 and the middle leg 5 of the second type magnetic core elements 3. Therein, the winding legs 5 and the return legs 6 are arranged alternatingly along the yoke extension direction 9 (i.e. winding, return, winding, return, winding in yoke extension direction).

Furthermore, air gaps 11 are provided between all winding legs 5 of the magnetic core elements 2, 3 and an adjacent yoke 4 or adjacent winding leg 5 of another magnetic core element 2, 3. Preferably, the return legs 6 are not separated by air gaps 11.

As illustrated herein, the electrical windings 7 of the two second type magnetic core elements 3 span or surround the respective air gaps 11. However, the electrical windings 7 of adjacent and opposing winding legs 5 of the two second type magnetic core elements 3 are separate electrical windings 7, i.e. not electrically directly connected to one another, in other words are insulated from one another, so as to constitute primary and secondary side of a transformer. Preferably, the windings 7 may be in a bifilar arrangement or may be for example provided layer-for-layer in the stacking direction 8 (i.e. alternating layers).

Furthermore, as shown in Fig. 1, all winding legs 5 of the first type magnetic core element 2 and all winding legs 5 of the second type magnetic core elements 3 are arranged collinearly along and parallel to the stacking direction 8.

This exemplary configuration has the particular advantage in that cooling of the integrated magnetic component 1 can be carried out easily on the outermost legs 5 of the second type magnetic core elements 3, i.e. on outer surfaces thereof, while providing three legs 5 for the first type magnetic core element 2 reduces weight, volume and costs of the integrated magnetic component 1. Furthermore, as opposed to a EE∃ configuration, the magnetic flux 10 is compensated in the return legs 6 of the two second type magnetic core elements 3 such that current imbalances, which can occur in three-phase 120° shifted current applications, can be balanced or compensated for.

The shown exemplary configuration is especially suited for unidirectional LLC resonant converters, as will be shown below.

Fig. 2 shows a view of an integrated magnetic component 1 according to a second embodiment of the present invention.

Herein, in comparison to embodiment one, in the yoke extension direction 9, the return legs 6 of the second type magnetic core elements 3 are respectively the two outermost legs 6 (i.e. top and bottom).

Herein, the winding legs 5 are the middle three legs 5 of the second type magnetic core elements 3 such that these are arranged, along the yoke extension direction from top to bottom in return leg 6, winding leg 5, winding leg 5, winding leg 5, return leg 6.

This embodiment, additionally to the foregoing, has the particular advantage in that electromagnetic fields are screened by the outer return legs 6 and prevented from extending far outside of the integrated magnetic component 1, which reduces unwanted EMI (electromagnetic interference).

Furthermore, respectively two of the winding legs 5 of the first type magnetic core element 2 and two of the winding legs 5 of the second type magnetic core elements 3 are arranged non-collinearly along and parallel to the stacking direction 8. The respective middle legs 5, which are winding legs 5, are arranged collinearly along and parallel to the stacking direction 8. Further, the outermost winding legs 5 of the first magnetic core element 2 are arranged collinearly with the outermost return legs 6 of the second magnetic core elements 3.

Fig. 3 shows a view of an integrated magnetic component 1 according to a third embodiment of the present invention. Fig. 4 shows a view of an integrated magnetic component 1 according to a fourth embodiment of the present invention.

In embodiments three and four, in comparison to the first and second embodiments, a height 12 of the first type magnetic core element 2 along the yoke extension direction 9 is smaller than that of the two second type magnetic core elements 3.

In embodiment three, the winding legs 5 of the second type magnetic core elements 3 are the middle three legs 5, with the return legs 6 being the two outermost legs 6. Due to the height 12 of the first type magnetic core element 2, the winding legs 5 of the first type magnetic core element 2 are collinear with the winding legs 5 of the second type magnetic core elements 3. Thereby, particularly high suppression of EMI as well as size, weight and volume reduction can be achieved.

In embodiment four, the winding legs 5 of the second type magnetic core elements 3 are the two outermost legs 5 and the middle leg 5, with the return legs 6 therebetween in yoke extension direction 9. Thereby, the winding legs 5 of the first type magnetic core element 2 are collinear with two return legs 6 and one (the middle) winding leg 5 of the second type magnetic core element 3. Thereby, particularly efficient cooling and size, weight and volume reduction can be achieved.

Now, in the following, configuration examples of the first total number of legs 5, 6 being five and the second total number of legs 5, 6 being three are described. For example, such configurations are also referred to as a WE∃ arrangements.

Fig. 5 shows a view of an integrated magnetic component 1 according to a fifth embodiment of the present invention. Fig. 6 shows a view of an integrated magnetic component 1 according to a sixth embodiment of the present invention.

In the fifth and sixth embodiments, the first type magnetic core element 2 comprises five legs 5, 6, and the second type magnetic core elements 3 respectively comprise three legs 5. In other words, the second type magnetic core elements 3 comprise no return legs 6, only winding legs 5.

In embodiment five, in the yoke extension direction 9, the winding legs 5 of the first type magnetic core element 2 are the two outermost legs 5 and the middle leg 5, especially with the winding legs 5 and the return legs 6 being arranged alternatingly along the yoke extension direction 9. This configuration has the particular advantage in that cooling can be carried out easily and efficiently on outer surfaces of the first type magnetic core element 2, while size, weight and costs are advantageously reduced by providing two E-core second type magnetic core elements 3.

In embodiment six, in the yoke extension direction 9, the return legs 6 of the first type magnetic core element 2 are the two outermost legs 6. Therein, the winding legs 5 of the first type magnetic core element 2 are the three middle legs 5 thereof.

Furthermore, in embodiment five, all winding legs 5 are collinear. In embodiment six, two winding legs 5 of the first type magnetic core element 2 are non-collinear with two winding legs 5 of the second type magnetic core element 3.

The foregoing described embodiments, as will be discussed below, are especially suited for unidirectional LLC resonant converter configurations. In the following, embodiments of integrated magnetic components 1 especially suitable for bidirectional LLC resonant converter applications are discussed.

Fig. 7 shows a view of an integrated magnetic component 1 according to a seventh embodiment of the present invention. Fig. 8 shows a view of an integrated magnetic component 1 according to an eighth embodiment of the present invention.

In embodiments seven and eight, the integrated magnetic component 1 further comprises another first type magnetic core element 2.

Herein, this another (or "second") first type magnetic core element 2 opposes said one (or "first") first type magnetic core element 2 along the stacking direction. Therein, the two first type magnetic core elements 2 sandwich, along the stacking direction 8, the two second type magnetic core elements 3. This configuration is also referred to as WEEW (WE∃M) or EWW∃.

Embodiment seven, shown in Fig. 7, corresponds to embodiment five shown in Fig. 5 with an additional first type magnetic core element 2. Embodiment eight, shown in Fig. 8, corresponds to embodiment one shown in Fig. 1 with an additional first type magnetic core element 2. It is to be understood that any of the foregoing embodiments may be combined with an additional first type magnetic core element 2 as demonstrated by Figs. 7 and 8.

In a combination with embodiments five and six, such a configuration is also referred to as WE∃W (or WE∃M).

Now, with reference to Figs. 9 to 14, LLC resonant converters of the present invention employing the foregoing described integrated magnetic components 1 are explained. In these figures, circuitry of these LLC resonant converters are shown, along with inductances Lᵣₓₓ (result of electrical windings 7 and magnetic core elements 2,3), capacitors Cᵣₓₓ (subscript "r" standing for "resonance" or "resonant"), primary winding 7 (Pₓₓ) and secondary winding 7 (Sₓₓ) and air gaps 11 (gₓₓₓ).

Fig. 9 shows a view of a unidirectional LLC resonant converter 100 according to a ninth embodiment of the present invention. Fig. 10 shows a view of a unidirectional LLC resonant converter 100 according to a tenth embodiment of the present invention. Fig. 11 shows a view of a unidirectional LLC resonant converter 100 according to an eleventh embodiment of the present invention.

The unidirectional LLC resonant converter 100 of embodiments nine to eleven comprises an input converter 101, an output converter 102, and the integrated magnetic component comprising 1 one first type magnetic core element 2 and two second type magnetic core elements 3.

Therein, the input converter 101 is connected to the windings 7 of the one first type magnetic core element 2. The output converter 102 is connected to the windings 7 of the second, along the stacking direction 8, second type magnetic core element 3.

Further, the electrical windings 7 of the first type magnetic core element 2 are connected in series with the electrical windings 7 of the first second type magnetic core element 3. Thereby, the first type magnetic core element 2, with its windings 7, is part of a choke. The two second type magnetic core elements 3 are part of primary and secondary sides of a transformer.

In other words, the first of the second type magnetic core elements 3 is part of a primary side, and the second of the second type magnetic core elements 3 is part of a secondary side of a transformer. With respect to the electrical windings 7 and their generated magnetic flux, the first of the second type magnetic core elements 3 is also part of a secondary side, and the second of the second type magnetic core elements 3 is also part of a primary side of a transformer. The primary side and the secondary side of the transformer are electrically insulated from one another.

In the unidirectional LLC resonant converter 100 of embodiment nine, an integrated magnetic component 1 of embodiment one is implemented.

In the unidirectional LLC resonant converter 100 of embodiment ten, an integrated magnetic component 1 of embodiment five is implemented.

In the unidirectional LLC resonant converter 100 of embodiment eleven, an integrated magnetic component 1 of embodiment three is implemented.

The foregoing implementation examples of the unidirectional LLC resonant converter 100 are illustrative. The unidirectional LLC resonant converter 100 can employ any one of the embodiments of the integrated magnetic component 1, especially embodiments one to six.

Fig. 12 shows a view of a bidirectional LLC resonant converter 110 according to a twelfth embodiment of the present invention. Fig. 13 shows a view of a bidirectional LLC resonant converter 110 according to a thirteenth embodiment of the present invention. Fig. 14 shows a view of a bidirectional LLC resonant converter 110 according to a fourteenth embodiment of the present invention.

The bidirectional LLC resonant converter 110 of embodiments twelve to fourteen comprises an input converter 101, an output converter 102, and the integrated magnetic component 1 comprising the two first type magnetic core elements 2 and the two second type magnetic core elements 3.

Herein, the input converter 101 is connected to the windings 7 of the first, along the stacking direction 8, of the first type magnetic core elements 2, and the output converter 102 is connected to the windings 7 of the second, along the stacking direction 8, of the first type magnetic core elements 2.

Preferably, in the bidirectional LLC resonant converter 110, both the first type magnetic core elements 2, together with their windings 7, are part of chokes, whereas the second type magnetic core elements 3 are part of the transformer (primary and secondary side thereof) of the converter 110.

In the bidirectional LLC resonant converter 110 of embodiment twelve, an integrated magnetic component 1 of embodiment one with an additional first type magnetic core element 2 is implemented.

In the bidirectional LLC resonant converter 110 of embodiment thirteen, an integrated magnetic component 1 of embodiment three with an additional first type magnetic core element 2 is implemented.

In the bidirectional LLC resonant converter 110 of embodiment fourteen, an integrated magnetic component 1 of embodiment seven is implemented.

The foregoing implementation examples of the bidirectional LLC resonant converter 110 are illustrative. The bidirectional LLC resonant converter 110 can employ any one of the embodiments of the integrated magnetic component 1, especially embodiments seven and eight, especially with an additional first type magnetic core element 2 in the case of embodiments one to six.

Thereby, an LLC resonant converter 100, 110 (unidirectional or bidirectional) is provided with the foregoing described advantages of reduced weight, volume and costs and in particular high maximum power delivery and efficiency with easy and efficient cooling and reduced EMI.

In addition to the foregoing written explanations, it is explicitly referred to figures 1 to 14, wherein the figures in detail show circuit diagrams and configuration examples of the invention.

### List of Reference Numerals

- 1: Integrated magnetic component
- 2: first type magnetic core element
- 3: second type magnetic core element
- 4: yoke
- 5: winding leg
- 6: return leg
- 7: electrical winding
- 8: stacking direction
- 9: yoke extension direction
- 10: magnetic flux
- 11: air gap
- 12: height
- 100: unidirectional LLC resonant converter
- 101: input converter
- 102: output converter
- 110: bidirectional LLC resonant converter

## Claims

1. Integrated magnetic component (1) for a converter (100, 110), comprising:
at least one first type magnetic core element (2) comprising a yoke (4) and at least three legs (5, 6), wherein a first total number of legs (5, 6) is defined as a number of said legs (5, 6) of each of said at least one first type magnetic core element (2);
at least one second type magnetic core element (3) comprising a yoke (4) and at least three legs (5, 6) wherein a second total number of legs (5, 6) is defined as a number of said legs (5, 6) of each of said at least one second type magnetic core element (3); wherein
at least one first type magnetic core element (2) and at least one second type magnetic core element (3) are stacked one on another along a stacking direction (8) such that their legs (5, 6) are arranged in row,
the first total number of legs (5, 6) and the second total number of legs (5, 6) are each an addition of a respective number of winding legs (5), around which electric winding (7) is wound, with a number of return legs (6), around which no electric winding (7) is wound, and
the first total number of legs (5, 6) and the second total number of legs (5, 6) are non-equal.

2. Integrated magnetic component (1) according to claim 1, wherein the number of winding legs (5) of the first type magnetic core element (2) and the number of winding legs (5) of the second type magnetic core element (3) are equal.

3. Integrated magnetic component (1) according to any one of the foregoing claims, wherein the number of return legs (6) of the first type magnetic core element (2) and the number of return legs (6) of the second type magnetic core element (3) are non-equal.

4. Integrated magnetic component (1) according to any one of the foregoing claims, comprising, in order along stacking direction (8), one first type magnetic core element (2) and two second type magnetic core elements (3), wherein the second of the two second type magnetic core elements (3) opposes the first of the two second type magnetic core elements (3).

5. Integrated magnetic component (1) according to claim 4, wherein the first total number of legs (5, 6) is three and the second total number of legs (5, 6) of each of the two second type magnetic core elements (3) is five.

6. Integrated magnetic component (1) according to claim 5, wherein the first type magnetic core element (2) comprises three winding legs (5) and no return legs (6) and each of the second type magnetic core elements (3) comprises three winding legs (5) and two return legs (6).

7. Integrated magnetic component (1) according to claim 6, wherein, in a yoke extension direction (9) perpendicular to the stacking direction (8), the winding legs (5) of the second type magnetic core elements (3) are the two outermost legs (5) and the middle leg (5), especially with the winding legs (5) and the return legs (6) being arranged alternatingly along the yoke extension direction (9).

8. Integrated magnetic component (1) according to claim 6, wherein, in a yoke extension direction (9) perpendicular to the stacking direction (8), the return legs (6) of the second type magnetic core elements (3) are the two outermost legs (6).

9. Integrated magnetic component (1) according to claim 4, wherein the first total number of legs (5, 6) is five and the second total number of legs (5, 6) is three.

10. Integrated magnetic component (1) according to claim 9, wherein the first type magnetic core element (2) comprises three winding legs (5) and two return legs (6) and each of the second type magnetic core elements (3) comprises three winding legs (5) and no return legs (6).

11. Integrated magnetic component (1) according to claim 10, wherein, in a yoke extension direction (9) perpendicular to the stacking direction (8), the winding legs (5) of the first type magnetic core element (2) are the two outermost legs (5) and the middle leg (5), especially with the winding legs (5) and the return legs (6) being arranged alternatingly along the yoke extension direction (9).

12. Integrated magnetic component (1) according to claim 10, wherein, in a yoke extension direction (8) perpendicular to the stacking direction (9), the return legs (6) of the first type magnetic core element (2) are the two outermost legs (6).

13. Integrated magnetic component (1) according to any one of claims 4 to 12, further comprising another first type magnetic core element (2), wherein the another first type magnetic core element (2) opposes said one first type magnetic core element (2) along the stacking direction (8), and wherein the two first type magnetic core elements (2) sandwich, along the stacking direction (8), the two second type magnetic core elements (3).

14. Unidirectional LLC resonant converter (100) including an input converter (101), an output converter (102), and the integrated magnetic component (1) according to any one of claims 4 to 12, comprising one first type magnetic core element (2), wherein the input converter (101) is connected to the windings (7) of the one first type magnetic core element (2) and the output converter (102) is connected to the windings (7) of the second, along the stacking direction (8), second type magnetic core element (3).

15. Bidirectional LLC resonant converter (110) including an input converter (101), an output converter (102), and the integrated magnetic component (1) according to claim 13, wherein the input converter (101) is connected to the windings (7) of the first, along the stacking direction (8), first type magnetic core element (2), and the output converter (102) is connected to the windings (7) of the second, along the stacking direction (8), first type magnetic core element (2).
